Europäisches Patentamt

(19) **European Patent Office** ·

Office européen des brevets

(11) Numéro de publication:   **0 093 647**
**B1**

(12)   FASCICULE DE BREVET EUROPEEN

(45) Date de publication du fascicule du brevet: 07.10.87

(51) Int. Cl.⁴: **A 01 J 25/02, A 01 J 25/06**

(21) Numéro de dépôt: **83400820.3**

(22) Date de dépôt: **26.04.83**

(54) **Cuve destinée à la préparation du caille en vue de la fabrication de fromages.**

(30) Priorité: **29.04.82 FR 8207417**

(43) Date de publication de la demande:
**09.11.83 Bulletin 83/45**

(45) Mention de la délivrance du brevet:
**07.10.87 Bulletin 87/41**

(84) Etats contractants désignés:
**BE CH DE GB IT LI NL**

(56) Documents cités:
**DE-C- 962 557**
**FR-A-2 264 476**
**FR-A-2 283 632**

(73) Titulaire: **BURTON-CORBLIN, Société dite:**
**78-80 Boulevard Saint Marcel BP 111**
**F-75224 Paris Cédex 05 (FR)**

(72) Inventeur: **Ballet, Michel**
**7, rue Vésale**
**F-75005 Paris (FR)**

(74) Mandataire: **Armengaud, Charles**
**Cabinet ARMENGAUD AINE 3, Avenue Bugeaud**
**F-75116 Paris (FR)**

Courier Press, Leamington Spa, England.

## Description

La présente invention concerne une cuve destinée à la préparation de caillé en vue de la fabrication de fromages.

On sait que cette préparation comporte les opérations successives de tranchage et de brassage du caillé.

Le tranchage consiste à séparer la masse de caillé en fines lanières ou bandes de section généralement carrée à l'aide d'un outil de forme adéquate puis à découper ces lanières ou bandes afin d'obtenir des éléments appelés "grains" de caillé de forme générale cubique.

Le brassage qui suit le tranchage, a pour but de maintenir les grains en suspension dans le sérum et de les amener sous la forme de grains généralement sphériques et de les "coiffer"-le tout sans perdre de caillé.

On a certes, déjà proposé comme le fait par exemple le document Fr.—A—2.283.632, d'équiper les cuves de divers moyens pour mécaniser les outils utilisés pour le tranchage et le brassage et automatiser leur fonctionnement. Cependant, les problèmes ainsi soulevés n'ont pas été entièrement résolus et, pratiquement, les opérations dont il s'agit sont, présentement, encore menées manuellement.

La présente invention concerne une cuve pourvue de moyens permettant de réaliser successivement et automatiquement, par simple changement d'outils, les opérations de tranchage et de brassage, ces moyens étant, suivant l'invention, agencés de façon à se rapprocher au mieux de ce qui est réalisé manuellement, avec l'avantage de mettre en mouvement la totalité de la masse: caillé-sérum sur toute la longueur de la cuve-et de pouvoir opérer sur des cuves de grande capacité, ce qui, manuellement est irréalisable.

La cuve suivant l'invention, présente les caractéristiques exposées, notamment dans la revendication 1.

Les divers caractéristiques et avantages de l'invention ressortiront de la description, qui va suivre, d'une de ses formes possible de réalisation, donnée uniquement à titre d'exemple non limitatif.

Au cours de cette description, on se réfère aux dessins ci-joints sur lesquels:

les Fig. 1 à 3 sont des vues schématiques montrant la cinématique utilisée suivant l'invention,

la Fig. 4 est une vue en perspective avec arrachement,

- la Fig. 5 est une vue en bout, et

- la Fig. 6 est une vue en coupe longitudinale, d'une cuve suivant l'invention.

Le problème à résoudre consiste, en utilisant un arbre unique sur lequel sont adaptés les outils de tranchage et de brassage, à reproduire automatiquement les mouvements conférés à ces outils, que sont:

- un mouvement circulaire autour de l'axe de la cuve pour le tranchage transversal,

- un mouvement à la fois circulaire et un mouvement rectiligne pour le brassage.

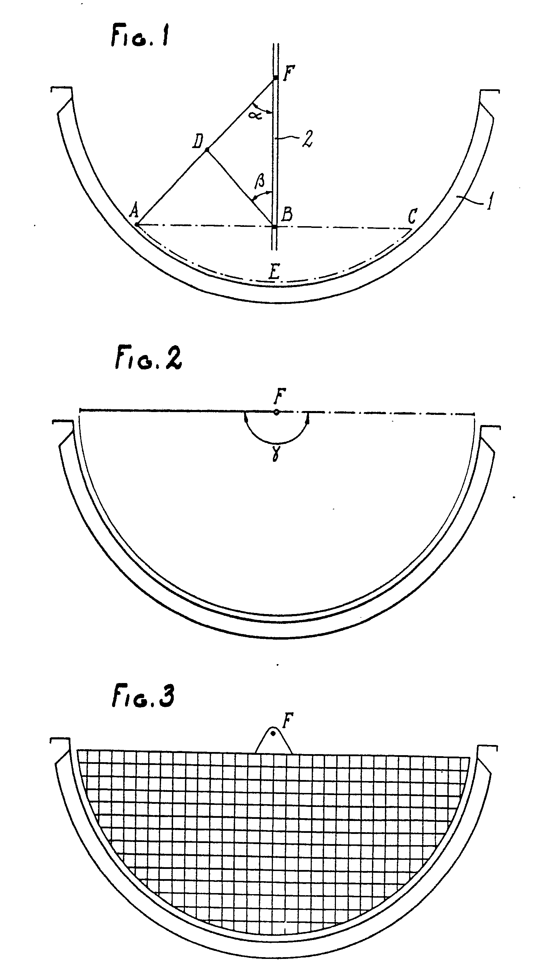

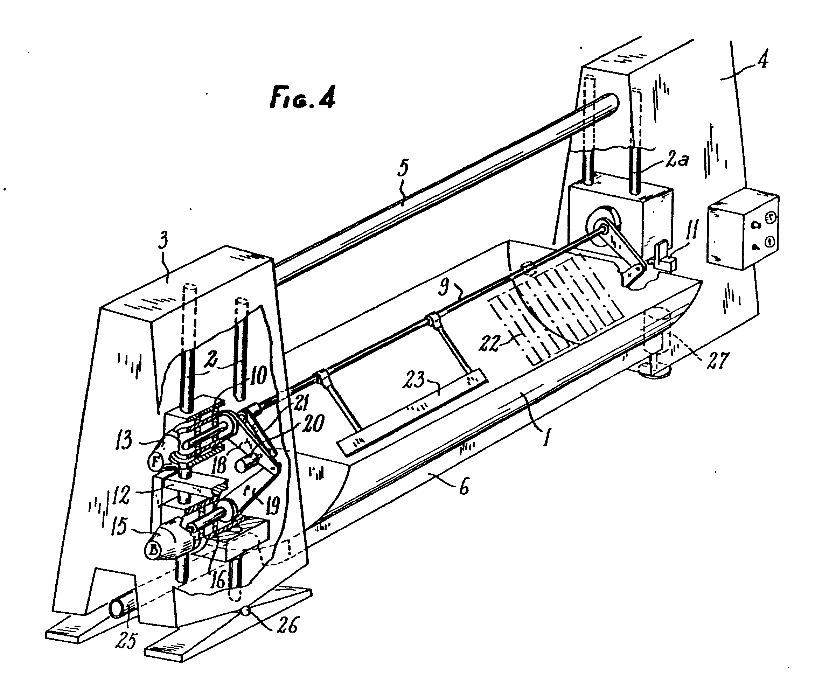

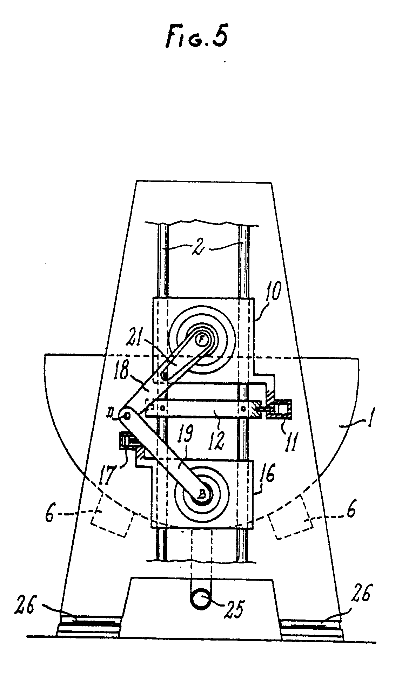

Ce problème est résolu, en. utilisant, conformément à l'invention, la cinématique suivante (voir Fig. 1 à 3).

Soit 1 la cuve de fabrication que est, on le rappelle, une cuve horizontale de forme semi-circulaire en section droite, F un point matérialisant l'arbre porte-outils et B un point matérialisant un arbre relié cinématiquement à l'arbre F, les arbres F et B étant superposés dans une glissière 2, prévue dans le plan médiam vertical passant par l'axe longitudinal de la cuve et susceptibles aussi bien de se déplacer dans ce plan que d'être bloqués dans une position déterminée sur la glissière.

Pour réaliser, en vue des opérations de brassage, un mouvement circulaire toujours autour de F, ce mouvement peut s'effectuer de deux manières:

-soit en immobilisant le point F en translation dans la glissière et en provoquant un mouvement de rotation autour de F en laissant le point B libre de se déplacer dans la glissière,

-soit en immobilisant le point F en translation dans la glissière et en provoquant un mouvement de rotation autour de B tout en laissant le point B libre de se déplacer dans la glissière.

Dans ces conditions, la trajectoire du point A est un cercle de rayon FA et le point A décrira l'arc de cercle AEC après avoir effectué une rotation angulaire 2â. Pour que le mouvement soit possible il faut que le point B soit libre dans la glissière 2 pour permettre son déplacement rectiligne dans la glissière.

Si la rotation angulaire s'effectue autour du point B avec le point F fixe l'angle $\beta$ sera égal à l'angle â, mais parcouru en sens inverse, le point B étant toujours libre dans la glissière 2.

Après la rotation soit de 2â soit de 2$\beta$, le point A est venu en C après avoir décrit l'arc de cercle AEC et le point B est revenu à sa position initiale sur la ligne ABC.

Pour réaliser un mouvement rectiligne suivant la droite CBA, il suffit de bloquer le point B sur la glissière 2 et de provoquer un mouvement de rotation, soit autour de F, soit autour de B, en libérant le point F dans la glissière 2.

Dans ces conditions, la trajectoire du point C vers A est une trajectoire rectiligne horizontale, le triangle BDA étant un triangle isocèle.

Il convient de noter que la trajectoire ainsi décrite peut ne pas être rectiligne dans le cas où la longueur AD n'est pas égale à la longueur BD, de même dans le cas où les longueurs AD, DF, BD, ne sont pas égales entre elles.

De ce que précède il résulte que:

-qu'un autre mouvement de brassage peut être réalisé avec la cinématique des points BDF sans que soit remis en cause le mouvement de rotation AEC avec la combinaison d'une autre trajectoire pour revenir au point A,

- que l'on peut, selon les besoins éventuels d'une fabrication particulière de fromage:

· dans le cas où AD=DF=DB faire uniquement et alternativement des mouvements de rotation et des mouvements de translation ou bien des combinaisons de ces mouvements,

· dans le cas où les longueurs AD, DF, DB ne sont pas égales entre elles, faire uniquement et alternativement des mouvements de rotation ou des mouvements dérivés du mouvement de translation, ou des combinaisons de ces mouvements.

De plus, sur le plan de la technologie fromagère, le fait de pouvoir disposer du mouvement de rotation AEC permet de bien maintenir les grains de caillé en suspension et surtout de bien pouvoir les mettre en mouvement après l'opération de tranchage du coagulm.

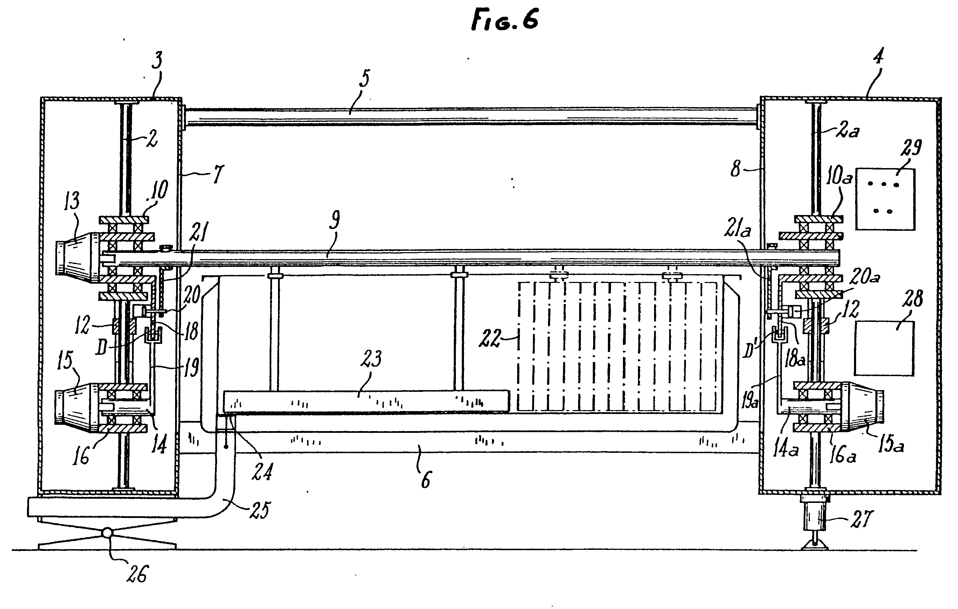

Pour réaliser le tranchage transversal (Fig. 2) il suffit de rendre le tranche-caillé transversal solidaire de l'arbre matérialisé par le point F en vue d'une rotation d'un angle ŷ dont l'amplitude peut aller jusqu'à 180° et même au-delà. Dans ces conditions, le tranche-caillé transvesal pourra décrire un arc de cercle en assurant le découpage coagulum.

Quant au tranchage longitudinal (Fig. 3) il est réalisé au moyen d'un tranche-caillé à déplacement longitudinal qui peut être manoeuvré manuellement ou mécaniquement.

Les Fig. 4 à 6 montrent un exemple de réalisation de l'invention, faisant application de la cinématique venant d'être décrite.

Dans l'exemple traité, la cuve 1 horizontale, de forme semi-cylindrique, éventuellement avantageusement à double enveloppe (voir Fig. 1) est monté sur un support constitué par deux châssis, l'un antérieur 3, l'autre postérieur 4, reliés par des entretoises, haute 5, basses 6, donnant à l'ensemble une grande rigidité mécanique. La cuve repose sur les entretoises basses 6.

Dans les faces frontales opposées des châssis 3 et 4 sont pratiquées des lumières 7, 8, permettant le débattement vertical de l'arbre 9 portant les outils servant au tranchage latéral et au brassage du caillé.

Cet arbre, situé au-dessus de la cuve, dans son plan médian vertical longitudinal tourillonne, au voisinage de chacune de ses extrémités, dans un boîtier 10, 10a.

Les boîtiers 10, 10a sont montésde façon à pouvoir se déplacer le long de glissières 2, 2a, prévues dans les châssis 3 et 4 et sont munis de verrous tels que 11, susceptibles de venir en prise sur des pièces fixes telles que 12, solidaires des glissières 2, 2a. Il est ainsi possible d'immobiliser les boîtiers 10, 10a, sur les glissières sur lesquelles ils coulissent.

L'arbre 9 est animé d'un mouvement de rotation par un actionneur 13, de tout type quelconque convenable, unique dans l'exemple traité. Il pourrait cependant y avoir un actionneur à chaque bout d'arbre.

L'arbre 9 est relié à chacune de ses extrémites à un arbre court 14, 14a, mis en rotation par des actionneurs 15, 15a. Chaque arbre 14, 14a, tourillonne dans un boîtier 16, 16a, monté à coulissement sur des glissières 2, 2a. Les boîtiers 16, 16a sont pourvus du même système de verrouillage 17, que les boîtiers 10, 10a, sur la pièce fixe 12 pour permettre leur immobilisation sur les glissières 2, 2a.

L'arbre 9 est relié aux arbres courts 14, 14a, par des bielles 18, 18a; 19, 19a, articulées entre elles en D, D'. Chacune des bielles 18, 18a, peut être rendue solidaire par un verrou 20, 20a, d'une bielle 21, 21a, elle-même solidaire de l'arbre 9.

Après remplissage de la cuve au niveau voulu avec le lait maturé et que la présure a joué son rôle en transformant le contenu de la cuve en coagulum, on procède à l'opération de tranchage.

Le tranchage longitudinal s'effectue manuellement à l'aide d'un tranchecaillé représenté schématiquement à la Fig. 3.

Pour l'opèration de tranchage transversal, l'arbre 9 est muni d'outils classiques représentes partiellement en 22 sur les Fig. 4 et 6. Pour mener à bien cette opération, on confère à l'arbre 9 par l'actionneur 13 une rotation d'un angle γ (voir Fig. 2) égal à 180°. Pour permettre à l'arbre 9 d'effectuer cette rotation, il est nécessaire de le libérer des moyens qui ne lue permettent d'effectuer qu'une rotation d'amplitude 2α inférieure à 180° (voir Fig. 1) pour le brassage du caillé comme décrit plus loin. Dans ce but, on débloque les verrous 20, 20a, pour désolidariser les bielles 21, 21a, des bielles 18, 18a. Par contre, les verrous 11, 11a, sont activés de façon à immobiliser les boîtiers 10, 10a, sur leurs glissières respectives et rendre ainsi fixe la position de l'arbre 9.

L'opération de tranchage transversal étant terminée, le ou les tranchecaillé 22, sont remplacés par des pelles 23 de brassage à qui l'on fait effectuer d'abord un mouvement circulaire d'amplitude 2α. Dans ce but, l'arbre 9 est amené dans une position telle que, les verrous 20, 20a, étant actionnés, les bielles 21, 21a, vont être rendues solidaires des bielles 18, 18a, permettant ainsi la rotation de l'arbre 9 par l'actionneur 15 et l'actionneur 15a. L'arbre 9 est maintenu en position par verouillage des boîtiers 10, 10a, sur leurs glissières respectives. Par contre, les verrous 17, 17a, étant escamotés, les boîtiers 16, 16a, peuvent couisser sur leurs glissières respectives. Les actionneurs 15, 15a, sont alors mis en route pour faire effectuer aux pelles de brassage 23 un mouvement circulaire d'amplitude 2α.

Il convient de remarquer qu'en raison des dispositions adoptées suivant l'invention l'arbre 9 joue un rôle d'équilibrage et de synchronisation des actionneurs 15, 15a.

En fin de mouvement les verrous 17, 17a, sont activés pour immobiliser sur leurs glissières les boîtiers 16, 16a.

On passe ensuite au mouvement de translation qu'implique l'opération de brassage. Les boîtiers 16 et 16 a, restant immobilisés, on libère les boîtiers 10, 10a, en effaçant les verrous 11. Les actionneurs 15, 15a, sont alors mis en marche. On peut ainsi donner aux pelles un mouvement de translation transversale. En fin de mouvement l'arbre 9 est revenu dans une position telle que, en libérant les verrous 20, 20a, il peut être désolidarisé des arbres courts entraînés par les actionneurs 15, 15a. Les boîtiers 10, 10a, sont alors à nouveau immobilisés et les boîtiers 16, 16a, à nouveau libérés. Un nouveau cycle d'opérations peut donc commencer.

Ce cycle d'opérations est conduit selon le processus nécessité par la technologie fromagère, les actionneurs étant munis de moyens permettant de faire varier leur vitesse et leur rampe de montée en vitesse ou en ralentissement.

Lorsque le traitement fromager est terminé, la cuve est vidangée au moyen de la vanne 24 conduisant l'ensemble caillé et sérum à la tubulure de vidange 25.

An cours de la vidange le niveau du caillé va baisser progressivement à l'intérieur de la cuve et il peut être nécessaire de poursuivre l'agitation ou le brassage tout au long de la vidange.

Ceci est possible en particulier si, conformément à l'invention, la position des verrous 17, 17a, est amenée à varier par exemple en faisant agir ces verrous sur une crémaillère (non représentée), ce qui permet de conserver un mouvement comparable au mouvement d'agitation et de brassage d'origine, tout en suivant le niveau du caillé et du sérum dans la cuve.

Pour obtenir une vidange intégrale il est nécessaire de l'incliner sur l'horizontale en fin de travail.

L'ensemble constitué par la cuve 1 et les châssis 3, 4, est muni sur le châssis antérieur 3 d'un axe d'articulation 26 sur le châssis postérieur 4 d'un moyen de levage tel que vérin 27 qui autorise ce mouvement.

Il faut aussi remarquer que le fait d'incliner la cuve n'empèche pas de poursuivre le mouvement d'agitation tant que dure cette inclinaison.

La commande des actionneurs 13 et 15 et du vérin 27 peut être effectuée à partir, par exemple, d'une centrale hydraulique 28 commandée par une armoire électrique 29 logée dans le châssis postérieur 4.

D'autres sources d'énergie peuvent aussi être utilisées (électricité, air comprimé, etc.) pour mettre en mouvement les actionneurs.

En outre, la solidarisation des arbres courts et de l'arbre porte-outils peut aussi être réalisée de différentes façons, par exemple en, faisant appel à des moyens comparables à des moyens d'embrayage, agissant sur l'embiellage que relie ces arbres.

## Revendications

1. Cuve destinée à la préparation de caillé, en vue de la fabrication de fromages, ladite cuve ayant une forme semi-circulaire en section droite transversale et un axe longitudinal horizontal, et étant munie d'un arbre unique porte-outils (9), s'étendant longitundinalement au-dessus de la cuve dans son plan médiam vertical et animé d'un mouvement de rotation sur lui-même, caractérisée en ce que, en vue d'imprimer aux outils (22, 23) que porte cet arbre, un mouvement pendulaire, un mouvement rectiligne transversal ou une combinaison de ces mouvements, l'arbre porteoutils (9) tourillone dans des boîtiers (10, 10a) montés de façon à pouvoir se déplacer sur des glissières (2, 2a) verticales prévues à chaque extrémité de la cuve (1), boîtiers dont l'un au moins est muni d'un moyen (13) de mise en rotation de l'arbre porte-outils, lequel est relié cinématiluement à des arbres courts (14, 14a) coaxiaux et situés sous les extrémitées de l'arbre porte-outils et parallèlement à celui-ci, lesdits arbres tourillonnant dans une seconde série de boîtiers (16, 16a) munis chacun d'un moyen d'entraînement (15, 15a) pour l'arbre (14, 14a) qu'il porte, ces boîtiers étant également montés de façon à pouvoir se déplacer sur les glissières verticals (2, 2a), des moyens éant prévus pour immobiliser l'une ou l'autre de ces séries de boîtiers sur les glissières, l'arbre porte-outils (9) et les arbres courts (14, 14a) étant reliés cinématiquement entre eux au moyen de bielles (18, 18a) montées libres en rotation sur l'arbre porte-outils et an moyen de bielles (19, 19a) solidaires des arbres courts, articulées entre elles et susceptibles d'être accouplées ou désaccouplées, par un moyen de verrouillage (20, 20a), de bielles (21, 21a) solidaires de l'arbre porte-outils, ces liaisons cinématiques étant réalisées ou interrompues en fonction des mouvements pendulaire et rectiligne transversal, seuls ou combinés, que l'on veut imprimer aux outils portés par l'arbre porte-outils (9).

2. Cuve suivant la revendication 1, caractérisée en ce que les moyens prévus pour immobiliser les boîtiers (10, 10a; 16, 16a) sur leurs glissières respectives, consistent en des verrous (11, 17) coopérant avec une pièce fixe (12) prévue sur les glissières (2, 2a).

3. Cuve suivant l'une quelconque des revendications précédentes, caractérisée en ce qu'elle est portée par des châssis (3, 4) reliés par des entretoises haute (5) et basses (6), la cuve reposant sur ses dernières.

4. Cuve suivant l'une quelconque des revendications précédentes, caractérisée en ce que les châssis (3, 4) sur lesquels elle est montée comportent des moyens (26, 27) permettant de l'incliner sur l'horizontale pour obtenir sa vidange intégrale sans interrompre les opérations d'agitation et de brassage du caillé.

5. Cuve suivant l'une quelconque des revendications précédentes, caractérisé en ce que les verrous de blocage (17) de la seconde série de boîtiers (16, 16a) peuvent agir sur un moyen tel que crémaillère, de façon à occuper une position que est fonction du niveau du caillé et du sérum dans la cuve, mème en cas d'inclinaison de cette dernière.

## Patentansprüche

1. Käsewanne mit halbkreisförmigem Querschnitt und horizontaler Längsachse, mit einem axialen Werkzeugträger, der sich längs der Lotebene durch die Mittelachse der Wanne erstreckt und sich um seine eigene Achse dreht, dadurch gekennzeichnet, daß sich der axiale Werkzeugträger (9) im Hinblick auf eine Pendelnde oder geradlinige Querbewegung oder eine Kombination dieser Bewegungen der am axialen Werkzeugträger angebrachten Werkzeuge (22, 23) in Lagergehäusen (10, 10a), die so angeordnet sind, daß sie an senkrechten Gleitschienen (2, 2a) an beiden Enden der Wanne (1) verschiebbar sind, dreht, wobei an mindestens einem dieser Gehäuse eine Vorrichtung (13) zum Antrieb des axialen Werkzeugträgers vorgesehen ist, die beweglich mit kurzen koaxiale verlaufenden Wellen (14, 14a), die sich unterhalb der Enden des axialen Werdzeugträgers parallel zu diesem befinden, verbunden ist, wobei sich diese Wellen wiederum in Lagergehäusen (16, 16a), die jeweils mit einer Antriebsvorrichtung (15, 15a) für die Wellen (14, 14a) versehen sind, drehen, wobei diese Lagergehäuse ebenfalls so angebracht sind, daß sie auf den senkrechten Gleitschienen (2, 2a) verschiebbar sind, wobei eine Vorrichtung zur Arretierung einer der beiden Lagergehäusegruppen auf den Gleitschienen vorgesehen ist, wobei der axiale Werkzeugträger (9) und die kurzen Wellen (14, 14a) durch Koppelglieder (18, 18a), die rotatorisch entkoppelt mit den axialen Werkzeuträger verbunden sind, und durch Koppelglieder (19, 19a), die fest an den kurzen Wellen befestigt sind, gelenkig miteinander verbunden sind, wobei diese Koppelglieder durch weitere Koppelelemente (21, 21a), die fest mit dem axialen Werkzeugträger verbunden sind, über eine Verriegelungsvorrichtung (20, 20a) aneinander angekoppelt oder abgekoppelt werden können, wodurch bewegliche Verbindungen hergestellt und wieder gelöst werden können, so daß sich die gewünschte pendelnde oder geradlinige Querbewegung des axialen Werkzeugträgers (9) alleine oder überlagert ergibt.

2. Käsewanne nach Anspruch 1, dadurch gekennzeichnet, daß die Vorrichtung zur Arretierung der Lagergehäuse (10, 10a; 16, 16a) auf den jeweiligen Gleitschienen aus Verriegelungselementen (11, 17) besteht, die in ein auf den Gleitschienen (2, 2a) befestigtes Teil (12) eingreifen.

3. Käsewanne nach Anspruch 1 oder 2, dadurch gekennzeichnet, daß sie durch Rahmen (3, 4) getragen wird, die durch obere und untere Verstrebungen (5; 6) verbunden sind, so daß die Wanne auf der unteren Verstrebung aufliegt.

4. Käsewanne nach einem der vorstehenden Ansprüche, dadurch gekennzeichnet, daß die Rahmen (3, 4), auf denen die Wanne ruht, eine Vorrichtung (26, 27) zur Einstellung einer horizontalen Neigung aufweisen, um eine vollständige Entleerung der Wanne ohne Unterbrechung des Betriebes und der Käseherstellung zu ermöglichen.

5. Käsewanne nach einem der vorstehenden Ansprüche, dadurch gekennzeichent, daß die Verriegelungseinrichtung (17) der zweiten Gruppe von Lagergehäusen (16, 16a), beispielsweise durch eine Zahnstange, bewegt werden kann, so daß eine bestimmte Stellung in Abhängigkeit von der Füllhöhe der Wanne mit Käse und Molke eingestellt werden kann, selbst wenn die Wanne horizontal geneigt ist.

**Claims**

1. A vat for the preparation of curd, with a view to the manufacture of cheese, said vat being semi-circular in shape in transverse cross section and having a horizontal longitudinal axis, and being equipped with a single toolholder shaft (9) extending longitudinally over the vat in its vertical centre plane and moving rotationally about itself, characterized in that, with a view to imparting a swivelling movement, a transverse rectilinear movement or a combination of these movements to the tools (22, 23) carried by this shaft, the toolholder shaft (9) rotates in bearings (10, 10a) mounted in such a way as to be able to move along vertical slides (2, 2a) provided at each end of the vat (1), at least one of which bearings is equipped with a means (13) of imparting rotary motion to the tool-holder shaft, which is connected kinematically to short coaxial shafts (14, 14a) situated under the ends of the tool-holder shaft and parallel therewith, said shafts rotating in a second set of bearings (16, 16a) each equipped with a drive means (15, 15a) for the shaft (14, 14a) which it carries, these bearings also being mounted in such a way as to be able to move along the vertical slides (2, 2a), means being provided for immobilizing one or other of these sets of bearings on the slides, the tool-holder shaft (9) and the short shafts (14, 14a) being connected kinematically together by means of connecting rods (18, 18a) mounted freely and rotatably on the tool-holder shaft and by means of connecting rods (19, 19a) which are fixedly connected to the short shafts, hinged together and capable of being coupled or uncoupled by a locking means (20, 20a) to or from connecting rods (21, 21a) fixedly connected with the tool-holder shaft, these kinematic connections being effected or broken in accordance with the swivelling and transverse rectilinear movements, alone or in combination, which it is desired to impart to the tools carried by the tool-holder shaft (9).

2. A vat according to claim 1, characterized in that the means provided for immobilizing the bearings (10, 10a; 16, 16a) on their respective slides consists of bolts (11, 17) interacting with a fixed part (12) provided on the slides (2, 2a).

3. A vat according to either one of the preceding claims, characterized in that it is carried by frames (3, 4) connected by upper (5) and lower (6) struts, the vat resting on these latter.

4. A vat according to any one of the preceding claims, characterized in that the frames (3, 4) on which it is mounted comprise means (26, 27) allowing it to be inclined in relation to the horizontal to empty it completely without interrupting the stirring and mixing thereof.

5. A vat according to any one of the preceding claims, characterized in that the blocking bolts (17) of the second set of bearings (16, 16a) can act on a means such as a rack, so as to occupy a position which is in accordance with the level of the curd and whey in the vat, even if the vat is inclined.

**Fig. 1**

**Fig. 2**

**Fig. 3**

Fig.4

## Fig.5

Fig.6